# EUROPÄISCHE PATENTSCHRIFT

(11) **EP 0 956 222 B1**
(45) Veröffentlichungstag und Bekanntmachung des Hinweises auf die Patenterteilung: **18.08.2004**
(21) Anmeldenummer: 98959755.4
(22) Anmeldetag: 23.10.1998
(51) Int. Cl.: B60S 1/52, B60S 1/32

(54) **DÜSENANORDNUNG SOWIE SCHEIBENWISCHERARM ZUM AUFNEHMEN DER DÜSENANORDNUNG**
NOZZLE SYSTEM AND WINDSCREEN WIPER ARM FOR RECEIVING SAID NOZZLE SYSTEM
SYSTEME D'AJUTAGES ET BRAS D'ESSUIE-GLACE DESTINE A RECEVOIR LEDIT SYSTEME D'AJUTAGES

(30) Priorität: 02.12.1997 DE 19753317; 04.04.1998 DE 19815171
(43) Veröffentlichungstag der Anmeldung: 17.11.1999
(73) Patentinhaber: ROBERT BOSCH GMBH, 70442 Stuttgart (DE)
(72) Erfinder: ZIMMER, Joachim, D-77880 Sasbach (DE)
(86) Internationale Anmeldenummer: PCT/DE1998/003110
(87) Internationale Veröffentlichungsnummer: WO 1999/028171

(56) Entgegenhaltungen:
- EP-A- 0 689 977
- DE-U- 8 708 171
- FR-A- 2 727 365
- GB-A- 2 047 079
- US-A- 5 239 726

## Beschreibung

### Stand der Technik

Die Erfindung betrifft eine Düsenanordnung sowie einen Scheibenwischerarm zum Aufnehmen der Düsenanordnung nach der Gattung der unabhängigen Ansprüche. Es ist bereits bekannt, Spritzwasserdüsen als zusätzliche Bauteile am Wischblatt zu befestigen und somit eine Verteilung des Wassers direkt im Bereich des Wischblattes zu ermöglichen. Dies hat den Vorteil, daß die Sichtbehinderung durch das aufgebrachte Spritzwasser nur von kurzer Dauer und auf einen in der Nähe des Wischblattes konzentrierten Bereich begrenzt ist, der durch die Wischbewegung in kürzester Zeit wieder abgewischt wird. Nachteilig an solchen Systemen ist, daß Witterungseinflüsse insbesondere Hagel und extreme Sonneneinwirkung die notwendigerweise flexiblen Teile dieser Anordnung zur Überbrückung der gelenkigen Bereiche zwischen Wischarm und Wischblatt stark beeinflussen. Lebensdauer und Zuverlässigkeit werden dadurch gesenkt.

Aus der US-A-5 239 786 oder der EP-A-0 689 977 ist es ferner bekannt, diese Anordnungen fest in den Scheibenwischerarm, beispielsweise in das Anschlußstück zum Wischblatt oder in das auf der Wischerwelle befestigte Befestigungsteil zu integrieren. Fällt eine solche Anordnung beispielsweise durch Verstopfen, Bruch oder dergleichen aus, muß der komplette wischarm ausgetauscht werden.

### Vorteile der Erfindung

Die Düsenanordnung mit den Merkmalen des Anspruchs 1 hat den Vorteil, daß sie eine optimale Verteilung des Spritzwassers ausgehend von zwei voneinander entferntliegenden Stellen am Wischarm ermöglicht und daß sie auswechselbar innerhalb des vom Wischarm umfaßten Raumes, nach außen nicht sichtbar anordenbar ist. Dadurch wird die gute Austauschbarkeit der bekannten, am Wischblatt anordenbaren Systeme mit den Eigenschaften des guten Schutzes und der Kompaktheit der festinstallierten Systeme verbunden.

Durch die in den Unteransprüchen aufgeführten Merkmale sind vorteilhafte Weiterbildungen der Düsenanordnung nach dem Anspruch 1 möglich. So können die Düsen einfach ausgetauscht werden, wenn die erste und die zweite Düse fest miteinander verbunden sind. Dadurch entsteht ein zusammenhängendes, gut handhabbares Gebilde. Sind die Düsenkörper einstückig miteinander verbunden, ist auch eine Vorjustage der Wasserabstrahlrichtung möglich. Eine kostengünstige Ausbildung ergibt sich, wenn die Düsen als Kunstoffspritzgußteil herstellbar sind.

Die Düsenanordnung kann durch eine Heizeinrichtung optimal ergänzt werden, die sich durch die beiden Düsenkörper sowie durch die die düsenkörperverbindende Einrichtung erstreckt. Dies ist insbesondere dann einfach möglich, wenn die Düsenkörper fest miteinander verbunden sind.

Eine einfache Montage, die auch von einem Nichtfachmann durchgeführt werden kann, ergibt sich, wenn die Düsenkörper Mittel zum Einklipsen und/oder Verrasten in einem Wischerarm aufweisen.

In vorteilhafter Weise weist ein Scheibenwischerarm zum Aufnehmen der Düsenanordnung ein Gelenk zum Abklappen des Scheibenwischers und eine Anschlußvorrichtung für ein Wischblatt auf, wobei in der Nähe des Abklappgelenks eine Aufnahme für den ersten Düsenkörper und in der Nähe der Anschlußvorrichtung für das Wischblatt eine Aufnahme für die zweite Düse vorgesehen sind. Ein solcher Wischarm hat ferner den Vorteil, daß er auch ohne eingebaute Düsenanordnung auf Kraftfahrzeuge angeordnet sein kann, ohne daß es dabei zu störenden optischen Eindrücken kommt. Die Düsenanordnung kann nachträglich eingebaut werden, z. B. vom Fahrzeughalter oder aber auch vor oder nach der Montage des Scheibenwischerarms am Kraftfahrzeug vom Hersteller montiert sein.

Der Wischerarm weist hierzu lediglich eine kleine Öffnung für den Durchtritt der von einer Düse abgegebenen Waschflüssigkeit auf, so daß bei gegebener technischer Funktionalität keine optische Beeinträchtigung entsteht. Zur Aufnahme des Düsenkörpers kann der Scheibenwischerarm ausgebaucht sein, wobei es von Vorteil ist, wenn die Öffnung in einem Bereich der Ausbauchung angebracht ist, deren Wand in Richtung auf die Aufnahme des Wischblattes weist. Dadurch ist es möglich, den Spritzwasserstrahl in einen unteren Bereich direkt vor das Wischblatt zu lenken. Durch die Anordnung der zweiten Düse in der Nähe der Aufnahme für das Wischblatt, die vorteilhaft als hakenförmige Aufnahme in diesem schmalen Bereich ausgebildet ist, kann die Verteilung des Wischwassers auf der Scheibe weiter optimiert werden. Auf diese Weise sind kurze Strahllängen realisierbar, so daß auch bei höheren Fahrzeuggeschwindigkeiten der anstehende Fahrtwind nur eine kleine Beeinflussung auf die Spritzwasserrverteilung ausübt. Die Spritzwasserverteilung durch die beiden Spritzwasserstrahle erfolgt bevorzugt entlang der Wischarm- bzw. der Wischblattlängserstreckung, sodaß die Sicht durch die Windschutzscheibe tatsächlich nur minimal beeinträchtigt wird, wenn die Wasseraufbringung nur in Wischrichtung vor dem Wischblatt erfolgt.

Die hakenförmige Aufnahme umgreift den Düsenkörper klipsartig und hält ihn in Position. Dabei kann es von Vorteil sein, wenn das am Wischarm anzuordnende Wischblatt eine Aussparung zur Aufnahme des nach unten vorstehenden Düsenkörpers aufweist. Der Düsenkörper kann dann entsprechend großzügig ausgelegt sein, so daß eine optimale Waschflüssigkeitsverteilung durch eine oder mehrere eingebaute, verstellbare, Düsen ermöglicht wird. Der Schutz des Düsenkörpers vor Umwelteinflüssen wird dadurch vergrößert.

### Zeichnung

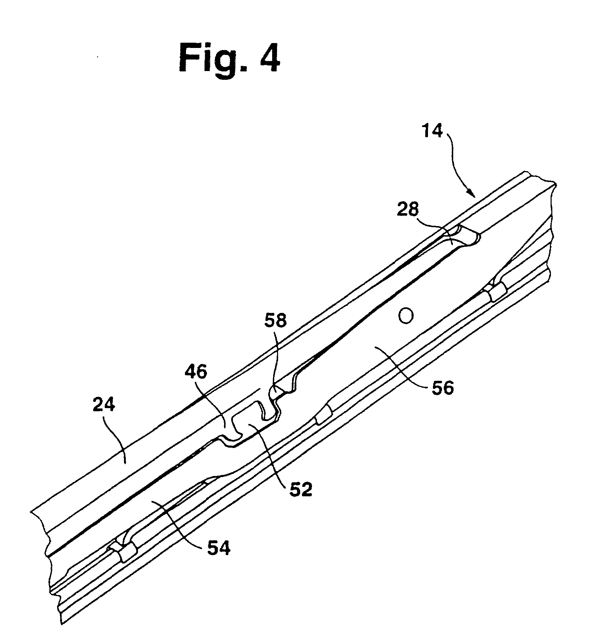

In der Zeichnung ist ein Ausführungsbeispiel der erfindungsgemäßen Düsenanordnung sowie eines Scheibenwischerarms zur Aufnahme einer Düsenanordnung dargestellt und in der nachfolgenden Beschreibung näher erläutert. Es zeigen Figur 1 eine Düsenanordnung sowie einen Scheibenwischerarm mit angebrachtem Wischblatt, Figur 2 einen Scheibenwischerarm isoliert, Figur 3 eine in einen Scheibenwischerarm eingebaute Düsenanordnung von der Unterseite des Scheibenwischerarms gesehen und Figur 4 eine Verbindung zwischen einem Scheibenwischerarm und einem Wischblatt ohne eingebaute Düsenanordnung in vergrößerter Darstellung.

### Beschreibung

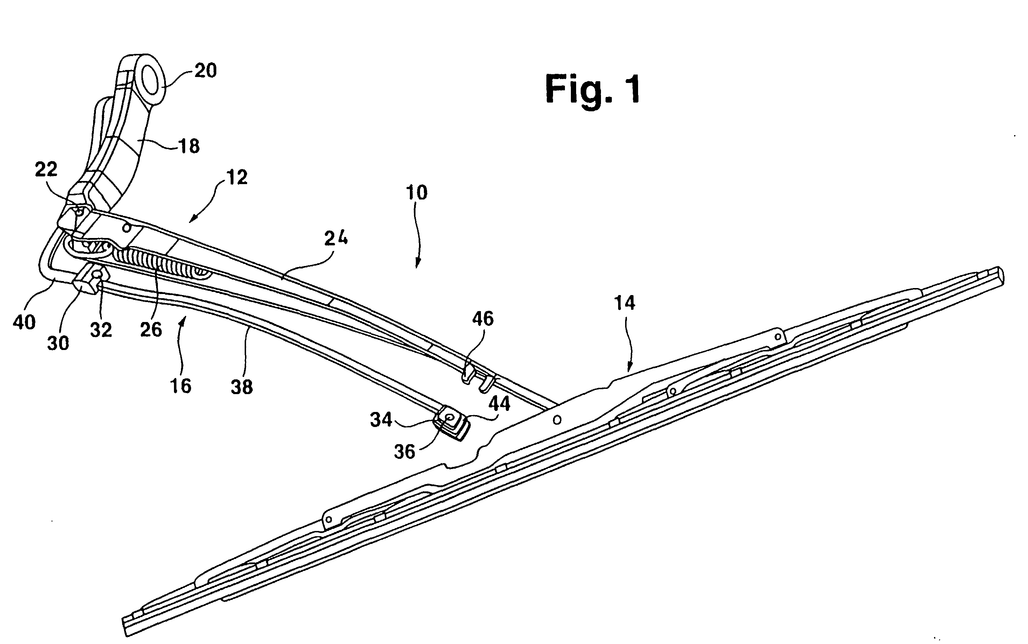

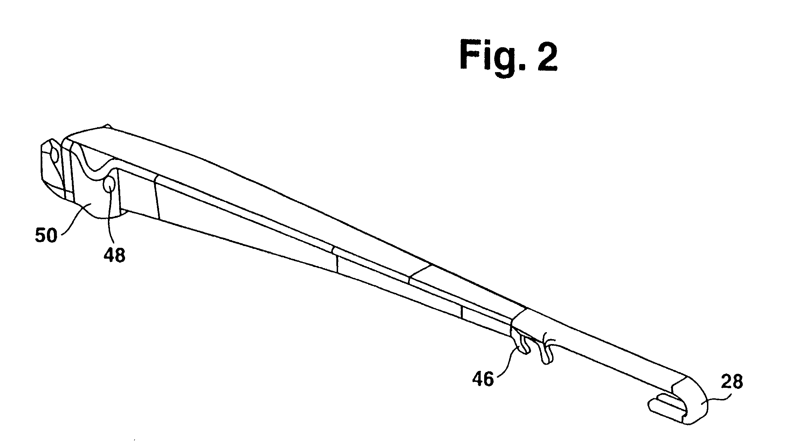

In Figur 1 ist ein Scheibenwischersystem 10, bestehend aus einem Wischerarm 12, einem Wischblatt 14 und einer Düsenanordnung 16 dargestellt. Der Wischerarm 12 besteht aus einem Befestigungsteil 18, an das eine Aufnahme 20 zur drehfesten Verbindung mit einer Wischerwelle angeformt ist und an das auf der der Aufnahme 20 gegenüberliegenden Seite ein Gelenk 22 zur Aufnahme eines langgestreckten Gelenkteils 24 angeordnet ist. Das Befestigungsteil 18 und das damit über das Gelenk 22 schwenkbar verbundene Gelenkteil 24 sind zueinander durch eine Feder 26 belastet, die zum einen den für den Wischvorgang notwendigen Anpressdruck erzeugt und zum anderen eine stabile Abklappstellung (wie dargestellt) ermöglicht. Zur Aufnahme des Wischblattes 14 weist das Gelenkteil 24 im dargestellten Ausführungsbeispiel einen Haken 28 (Figur 2) auf.

Die Düsenanordnung 16 weist einen ersten Düsenkörper 30 mit einer, ersten Düse 32 sowie einen zweiten Düsenkörper 34 mit einer, zweiten Düse 36 auf, die über eine Einrichtung 38 miteinander verbunden sind. Zum Anschluß der Düsenanordnung 16 an einen mit einer Pumpe ausgestatteten, nicht dargestellten Vorratsbehälter ist der erste Düsenkörper 30 mit einem Zuführschlauch 40 verbunden.

Der Düsenkörper 32 und der Düsenkörper 34 sind über die Einrichtung 38 so verbunden, daß sie zum einen in der Nähe des Gelenkes 22 und zum anderen in der Nähe des Anschlußmittels (Haken 28) zum Wischblatt im Wischarm 12 anordenbar sind. Die Düsenkörper werden dazu von unten in den vom Wischarm umschlossenen Raum eingebracht. Der Wischarm besteht aus dünnem Stahlblech und ist als Bieg-/Stanzteil kostengünstig herstellbar. Die Düsenanordnung 16 sitzt somit fast unsichtbar innerhalb des Gelenkteils 24 des Wischarms 12 und der Zuführschlauch 40 verläuft in bekannter Weise durch das Befestigungsteil 18 zum Vorratsbehälter.

Die Einrichtung 38, die die beiden Düsenkörper 30 und 34 miteinander verbindet, kann schlauchartig sein, ist im Ausführungsbeispiel jedoch als vorteilhaftere feste Verbindung ausgeführt. Die beiden Düsenkörper 30, 34 sind auf diese Weise einstückig miteinander verbunden und als Spritzgußteil hergestellt. Auf diese Weise entsteht ein starres Gebilde, das sehr einfach in den Wischarm eingebaut werden kann.

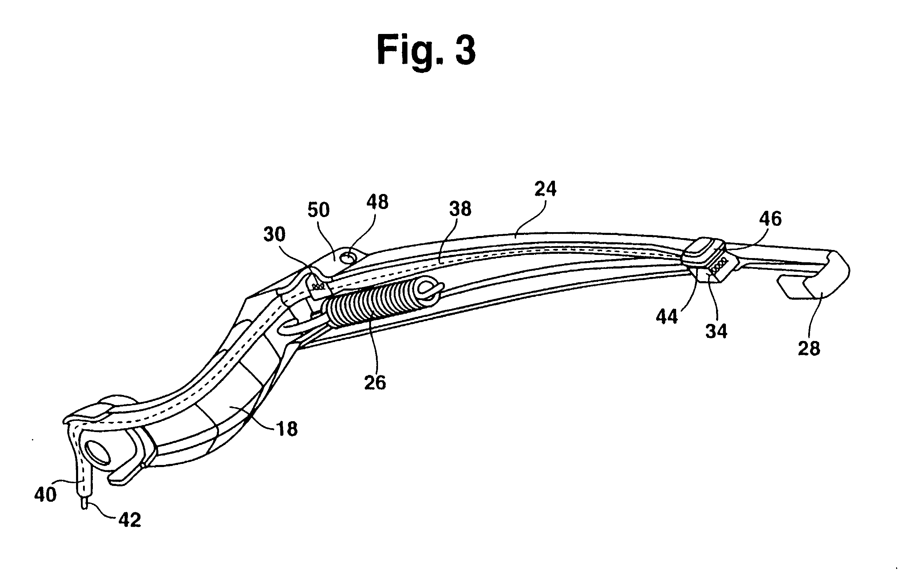

In die Düsenanordnung 16 ist eine Heizeinrichtung 42 integriert (siehe Figur 3), die sich drahtförmig durch den Zuführschlauch 40 und die Einrichtung 38 und wendelförmig durch die Düsenkörper 30, 34 erstreckt.

Die Düsenanordnung 16, insbesondere die Düsenkörper 30, 34 weisen Mittel 44 auf (dargestellt für den Düsenkörper 34 in Figuren 1 und 3), die geeignet sind um die Düsenanordnung 16 in den Wischarm einzurasten oder einzuklipsen.

Der Wischarm 12 weist an seinem Gelenkteil 24 dazu eine hakenförmige Aufnahme 46 auf, die sich in Arbeitsstellung des Scheibenwischersystems 10 in Richtung auf die zu wischende Scheibe erstreckt und nach unten offen ist. Bei eingebauter Düsenanordnung 16 umgreift die Aufnahme 46 das Mittel 44 des Düsenkörpers 34. Das Mittel 44 ist rillenförmig und rastet in die Aufnahme 46 ein. Damit ist ein sicherer Halt gewährleistet. Weitere, nicht dargestellte Rastmittel sind im Bereich des Düsenkörpers 30 angeordnet.

Während die Düse 36 des Düsenkörpers 30 durch die Art der Aufnahme 46 zur Scheibe hin offen ist, ist für die unter dem Blechmantel des Gelenkteils 24 angeordnete Düse 32 eine Öffnung 48 vorgesehen, durch die der Spritzstrahl austreten kann. Der Düsenkörper 30 wird dabei von einer Ausbauchung 50 des Gelenkteils 24 umfaßt. Die Öffnung 48 ist in der Ausbauchung 50 in Richtung auf die Wischblattaufnahme (Haken 28) eingebracht.

Zur Montage der Düsenanordnung 16 wird der erste Düsenkörper 30 mit dem im Befestigungsteil 18 vormontierten Zuführschlauch 40 verbunden und die Düsenanordnung 16 von unten in das Gelenkteil 24 des Wischarms 12 eingedrückt und verrastet. Dies kann vor der Montage des Scheibenwischersystems 10 am Kraftfahrzeug erfolgen, direkt nach dieser Montage oder gänzlich nachträglich vom späteren Kraftfahrzeugbesitzer.

Wenn, wie im Ausführungsbeispiel, das Gelenkteil 24 im Bereich des zweiten Düsenkörpers 34 sehr schmal ausgeführt ist und das später montierte Wischblatt 14 eng am Gelenkteil geführt wird, ist eine Aussparung 52 im Hauptbügel 54 des Wischblattes 14 vorzusehen, in die die Aufnahme 46 und der zweite Düsenkörper 34 - sofern montiert - eintauchen kann. Aus Stabilitätsgründen ist dabei ein gewisser Abstand der Aussparung 52 zur Aufnahme 56 des Hakens 28 gewahrt. Auf diese Weise kann ein stabilisierender Steg 58 im Hauptbügel 54 verbleiben.

## Patentansprüche

1. Düsenanordnung für Scheibenwischer insbesondere für Windschutzscheiben von Kraftfahrzeugen mit einer Zuführeinrichtung (40) für eine Waschflüssigkeit, die mit mindestens einem ersten Düsenkörper (30) verbunden und im Wischerarm (12) des Scheibenwischers anordenbar ist, **dadurch gekennzeichnet, dass** der erste Düsenkörper (30) mit einem zweiten Düsenkörper (34) so verbunden ist, dass eine Düse (32) des ersten Düsenkörpers (30) in der Nähe eines Gelenks (22) zum Abklappen des Wischerarms (12) und eine Düse (36) des zweiten Düsenkörpers (34) in der Nähe eines Anschlussmittels (28) zum Verbinden des Wischerarms (12) mit einem Wischblatt (14) im Wischarm (12) angeordnet ist.

2. Düsenanordnung nach Anspruch 1, **dadurch gekennzeichnet, daß** der erste und zweite Düsenkörper (30, 34) fest miteinander verbunden sind.

3. Düsenanordnung nach Anspruch 2, **dadurch gekennzeichnet, daß** der erste und zweite Düsenkörper (30, 34) einstückig miteinander verbunden sind.

4. Düsenanordnung nach Anspruch 3, **gekennzeichnet durch** eine Ausbildung als Kunststoffspritzgußteil.

5. Düsenanordnung nach einen der vorhergehenden Ansprüche, **dadurch gekennzeichnet, daß** eine Heizeinrichtung (42) innerhalb der Düsenkörper (30, 34) und der die Düsenkörper (30, 34) verbindenden Einrichtung (38) angeordnet ist.

6. Düsenanordnung nach einen der vorhergehenden Ansprüche, **dadurch gekennzeichnet, daß** die Düsenkörper (30, 34) Mittel (44) zum Verklipsen und/oder Verrasten mit dem Wischarm (12) aufweisen.

7. Scheibenwischerarm, zum Aufnehmen einer Düsenanordnung (16) nach einem der vorhergehenden Ansprüche mit einem Gelenk (22) zum Abklappen des Scheibenwischerarms (12) und einer Anschlußvorrichtung (56) für ein Wischblatt, **dadurch gekennzeichnet, daß** eine erste Aufnahme (50) für einen ersten Düsenkörper (30) in der Nähe des Abklappgelenkes (22) und eine zweite Aufnahme (46) für einen zweiten Düsenkörper (34) in der Nähe der Anschlußvorrichtung (28, 56) angeordnet sind.

8. Scheibenwischerarm nach Anspruch 7, **gekennzeichnet durch** mindestens eine Öffnung (48) für den Durchtritt von einer Düse (32, 36) abgegebene Waschflüssigkeit.

9. Scheibenwischerarm nach Anspruch 8, **gekennzeichnet durch** eine einen Düsenkörper (30) aufnehmende Ausbauchung, an deren einen zur Wischblattaufnahme (28, 52) weisenden Wand die Öffnung (48) eingebracht ist.

10. Scheibenwischerarm nach einen der Ansprüche 7 bis 9, **gekennzeichnet durch** mindestens eine haken- oder klammerförmige Aufnahme (46) für einen Düsenkörper (34).

## Claims

1. Nozzle arrangement for window wipers, in particular for windscreens of motor vehicles, having a feeding device (40) for a washer fluid, which device is connected to at least one first nozzle body (30) and can be arranged in the wiper arm (12) of the window wiper, **characterized in that** the first nozzle body (30) is connected to a second nozzle body (34) in such a manner that a nozzle (32) of the first nozzle body (30) is arranged in the vicinity of a joint (22) for folding down the wiper arm (12) and a nozzle (36) of the second nozzle body (34) is arranged in the vicinity of a joining means (28) for connecting the wiper arm (12) to a wiper blade (14) in the wiper arm (12).

2. Nozzle arrangement according to Claim 1, **characterized in that** the first and second nozzle bodies (30, 34) are connected fixedly to each other.

3. Nozzle arrangement according to Claim 2, **characterized in that** the first and second nozzle bodies (30, 34) are connected integrally to each other.

4. Nozzle arrangement according to Claim 3, **characterized by** being designed as a plastic injection-moulded part.

5. Nozzle arrangement according to one of the preceding claims, **characterized in that** a heating device (42) is arranged within the nozzle bodies (30, 34) and the device (38) connecting the nozzle bodies (30, 34).

6. Nozzle arrangement according to one of the preceding claims, **characterized in that** the nozzle bodies (30, 34) have means (44) for clipping and/or latching them to the wiper arm (12).

7. Window wiper arm for accommodating a nozzle arrangement (16) according to one of the preceding claims, having a joint (22) for folding down the window wiper arm (12) and a joining device (56) for a wiper blade, **characterized in that** a first mount (50) for a first nozzle body (30) is arranged in the vicinity of the folding-down joint (22) and a second mount (46) for a second nozzle body (34) is arranged in the vicinity of the joining device (28, 56).

8. Window wiper arm according to Claim 7, **characterized by** at least one opening (48) for the passage of washer fluid emitted by a nozzle (32, 36).

9. Window wiper arm according to Claim 8, **characterized by** a convexity which receives a nozzle body (30) and on the one wall of which, which faces the wiper-blade mount (28, 52), the opening (48) is made.

10. Window wiper arm according to one of Claims 7 to 9, **characterized by** at least one hook- or clip-shaped mount (46) for a nozzle body (34).

## Revendications

1. Système de gicleurs pour des essuie-glaces, en particulier pour des pare-brises de véhicules automobiles, comportant une installation d'acheminement (40) pour un liquide de lavage reliée à au moins un premier corps de gicleurs (30) et disposée dans le bras (12) de l'essuie-glace,
**caractérisé en ce que**
le premier corps de gicleurs (30) est relié à un deuxième corps de gicleurs (34) de telle manière qu'un gicleur (32) du premier corps de gicleurs (30) est disposé dans le bras d'essuie-glace (12) à proximité d'une articulation (22) destinée à rabattre le bras d'essuie-glace (12), et un gicleur (36) du deuxième corps de gicleurs (34) est disposé à proximité d'un moyen de raccordement (28) destiné à relier le bras d'essuie-glace (12) à une raclette d'essuie-glace (14).

2. Système de gicleurs selon la revendication 1,
**caractérisé en ce que**
le premier et le deuxième corps de gicleurs (30, 34) sont solidairement reliés l'un à l'autre.

3. Système de gicleurs selon la revendication 2,
**caractérisé en ce que**
le premier et le deuxième corps de gicleurs (30, 34) sont reliés l'un à l'autre en formant une seule pièce.

4. Système de gicleurs selon la revendication 3,
**caractérisé par**
une conception en pièce moulée par injection en matière synthétique.

5. Système de gicleurs selon l'une des revendications précédentes,
**caractérisé en ce qu'**
une installation de chauffage (42) est disposée à l'intérieur des corps de gicleurs (30, 34) et de l'installation (38) qui relie les corps de gicleurs (30, 34).

6. Système de gicleurs selon l'une des revendications précédentes,
**caractérisé en ce que**
les corps de gicleurs (30, 34) présentent des moyens (44) destinés à les retenir et/ou les encliqueter dans le bras d'essuie-glace (12).

7. Bras d'essuie-glace destiné à recevoir un système de gicleurs (16) selon l'une des revendications précédentes, comportant une articulation (22) pour rabattre le bras d'essuie-glace (12) et un dispositif de raccordement (15) destiné à une raclette d'essuie-glace,
**caractérisé en ce qu'**
un premier logement (50) destiné au premier corps de gicleurs (30) se trouve à proximité de l'articulation de rabat (22) et un deuxième logement (46) destiné au deuxième corps de gicleurs (34) et à proximité du dispositif de raccordement (28, 56).

8. Bras d'essuie-glace selon la revendication 7,
**caractérisé par**
au moins une ouverture (48) pour faire passer un liquide de lavage issu d'un gicleur (32, 36).

9. Bras d'essuie-glace selon la revendication 8,
**caractérisé par**
une protubérance qui reçoit un corps de gicleur (30), l'ouverture (48) étant pratiquée sur sa paroi qui est orientée vers la réception (28, 52) de la raclette d'essuie-glace.

10. Bras d'essuie-glace selon l'une des revendications 7 à 9,
**caractérisé par**
au moins une réception (46), en forme de crochet ou de pince, destinée à un corps de gicleurs (34).
